# EUROPEAN PATENT SPECIFICATION

(11) **EP 3 210 749 B1**
(45) Date of publication and mention of the grant of the patent: **12.12.2018**
(21) Application number: 17157847.9
(22) Date of filing: 24.02.2017
(51) Int. Cl.: B29C 47/08, B29C 47/00, B29L 7/00, B29K 27/18

(54) **DEVICE AND METHOD FOR EXTRUDING A STRIP OR SHEET OF PTFE MATERIAL**
VORRICHTUNG UND VERFAHREN ZUM EXTRUDIEREN VON PTFE-FOLIEN
DISPOSITIF ET PROCÉDÉ POUR L'EXTRUSION DE PTFE FILMS

(30) Priority: 29.02.2016 IT UB20161171
(43) Date of publication of application: 30.08.2017
(73) Proprietor: Flon Project S.r.l., 25031 Capriolo (IT)
(72) Inventor: BERGOMETTI, Pierluigi, 25031 Capriolo (IT)
(74) Representative: Emmi, Mario

(56) References cited:
- EP-A1- 0 240 699
- EP-A2- 1 201 397
- WO-A1-00/14150
- WO-A1-2012/117513
- DE-A1- 1 504 291
- RU-C1- 2 489 253

## Description

### Technical field

The present invention refers to the technical field concerning extruders of PTFE material.

In particular, the invention refers to an extruding device for allowing the extrusion of strips or sheets of PTFE (therefore semi-finished products) with bi-orientation of fibers.

### Background art

PTFE is an acronym to indicate a known material, that is polytetrafluoroethylene. It is a tetrafluoroethylene polymer which belongs to the olefin group.

Such a PTFE can be in the form of paste. In that case, it is malleable according to the present invention, as it has the tendency to distorts in fibers or filamented form.

As alternative, it can be of the granular type and in that case, basically, it is difficult to transform it into filamented form.

As said, the present invention is usable preferably with PTFE of the paste type.

However, PTFE, as said, is a well-known material and it is not the specific object of the present invention. For that reason, it will not be described here further concerning its chemical composition.

Such a material has countless application fields, as it is a material with many characteristics. For example, it is resistant to high temperatures, as it can be used as covering material for surfaces subjected to temperatures above certain ranges.

In addition, it has anti-adherence and impermeability characteristics.

It is used just in the field of impermeability as waterproof covering for clothing.

Even in the electrical field, it is used as covering material of wiring, as it proves to be a good insulation.

In its productive process, it can be obtained in such a manner so as to result composed by unidirectional fibers or also by bi-oriented fibers. "Bi-oriented fibers" means that a certain number of first fibers towards a direction intersects with second fibers placed horizontally (not necessarily orthogonally) with respect to the first fibers. Such an interlacement of fibers towards two or more directions is named "bi-directional" and has remarkable advantages. In particular, the tissue acquires much resistance against traction towards more directions (in particular, the directions of fibers development). Moreover, gaps are created between fibers going towards a direction and those going towards other directions, such that, if the size of these gaps can be controlled, it allows to produce very efficient waterproof fabrics. A size of the gaps can be selected indeed, such that the skin is able to perspire by preventing, at the same time, external water from penetrating inside.

In the field of wire covering for insulation, openings inevitably contribute to a lightening of the fabric and of thousands of meters of cable, thus contributing to a considerable weight reduction (just think, for example, to aircraft wiring). Furthermore, the trapped air contributes to an insulating effect improving the functionality of such a coating sheath.

Having introduced that, the realization method of the aforementioned sheets or strips of PTFE foresees the extrusion of spheres by means of a suitably shaped extruder. Spheres blend by creating a deformable paste which is extruded along a path obtained in the extruder.

For example, it is known and described the publication US3315020 for such a purpose.

That publication describes an extruder having a chamber 2 in which spheres of PTFE are arranged and pushed through a restriction section 3 thanks to the pushing action of a piston 1. Such a restriction section 3 converges into a further expansion section which has a preset angular spacing and width. Such a passage, during the extrusion, determines a flow pace of pasty material such that a part of fibers is arranged in diagonal way with respect to the first part with different angles. Strips or bi-directional sheets can be thus obtained.

Nevertheless, the solution exposed in US3315020 is not particularly efficient, as the number of diagonal fibers is never modifiable and the orientation obtained in the final strip or sheet is not satisfactory, as the gaps result too wide.

### Disclosure of the invention

It is therefore the aim of the present invention to provide an innovative device which allows to solve said technical inconveniences.

In particular, it is the aim of the present invention to provide a device which allows to obtain an orientation of fibers in the strip which results precise and functional, potentially giving the possibility to modify the number of diagonal fibers.

These and other aims are thus obtained with the present device (1) for the production of a strip or sheet of PTFE material, according to claim 1.

Such a device (1) comprises:
- An extrusion path (6, 8, 10, 11) of the material;
- An opening (6) through which to feed the material in the extrusion path;
- An outlet section (11) through which the extruded material exits from the device (1);
- Said extrusion path (6, 8, 10, 11) forming at least a first expansion chamber (8) whose inlet and outlet in/from said expansion chamber (8) are in the form of a restriction section (7, 9), said extrusion paths forming, in exiting from said first expansion chamber (8), a second expansion section (10);
wherein the device (1) is formed by a superior part (15) that overlaps to an inferior part (14), said two parts (14, 15) being detachable one from the other, so that, when detached, they give access to said first expansion chamber (8).

According to the invention, said inferior part (14) is formed by an internal element (4) on which said second expansion section (10) of the PTFE material is obtained, said internal element (4) being covered with an external sleeve(3) that is applied in a removable manner.

In this way, all said technical inconveniences are now solved.

In particular, the first expansion chamber (8), which has upstream a restriction section (7) and whose outlet (9) is formed by a further restriction section, allows to optimize the obtained product. In particular, sheets or strips have a high number of fibers intersecting fibers towards longitudinal direction, so creating a thicker weft with respect to the product obtained according to US3315020. All that lends flexibility and resistance to the strip, beyond making it lighter and improving its insulating qualities.

Such a device, having an expansion chamber whose inlet and outlet are two restriction sections, let the material be subjected to a process of restriction, widening, new restriction and subsequent widening in exiting from the section (9), thus allowing to obtain many fibers with diagonal direction with respect to longitudinal with a thick and precise weft.

In addition, as explained further, the expansion chamber which has upstream and downstream a restriction allows also to adjust the number of diagonal fibers, because such a chamber allows the application of a calibrating element.

Advantageously, for such a purpose, at least one calibrating element (70) can be foreseen, insertable in the expansion chamber (8) in an interchangeable manner, said calibrating element (70) being configured in such a way as to delimit on the whole the volume of the expansion chamber (8), creating a passage (71) of a pre-determined size for the material.

Therefore, the insertion and the use of such a calibrating element allows to vary the size of the expansion chamber on choice, even maintaining the sizes of the restriction section of input and output unchanged. This allows to adjust the number of obtainable diagonal fibers on choice, depending on needs.

The calibrating element can be, for example, barrel-shaped or generally cylindrical-shaped with an axial passage of predetermined size, through which the passage of material is constrained in use.

For that purpose, advantageously, a set of calibrating elements is foreseen with different diametrical sizes of passage (71).

In that way, depending on the required product, one or another calibrating element can be selected, thus allowing to obtain products with different number of diagonal fibers time after time. Therefore, the solution of the calibrating element is particularly advantageous to lend flexibility to the device as a whole.

Therefore, the chamber which has two restriction sections can contain a calibrating element inside, which it was not usable in a structure as described in US3315020.

Nevertheless, other extruders are known but are used to extrude different materials from PTFE and according to different extruding techniques. One of these documents is for example the publication EP0240699.

Such a publication, even describing an extruding device, does not describe any method to extrude PTFE, in particular by making it pass through two restriction sections upstream and downstream of the expansion chamber.

Moreover, EP0240699 does not deal with any calibrating element placed inside the first expansion chamber in interchangeable manner but it simply shows a sequence of chambers with different sections. Besides, the device described in EP0240699 does not allow the insertion of any calibrating device inside the first expansion chamber foreseen inside it, as such a chamber does not have any access which might have allowed such an insertion but it has only the same restrictive sections of input and output, obviously of such reduced sizes not to allow any insertion.

Therefore, it is not possible to modify the type of obtainable product.

In addition, advantageously, the second expansion section (10) of the material can be defined as second expansion chamber which converges in the exit.

According to the invention, such a device (1) is formed by at least two parts (14, 15) detachable one from the other, and so that, when detached, they give access to said expansion chamber (8).

In this way, the required calibrating element is easily insertable inside it time after time.

Nevertheless, even this solution is the preferred one, also the realization of a lateral insertion window of the closeable type is possible.

In any case, advantageously, the above-mentioned device is configured to allow the insertion of a calibrating element inside the first expansion chamber.

Such a calibrating element indeed has such a size that does not allow its direct passage through the restriction section 7 upstream of the first expansion chamber 8 and, also, is not insertable through the narrow section 9 downstream. It is indeed considerably larger with respect to these sections so as to occupy practically the entire volume of the first expansion chamber in such a manner so as to appropriately adjust its size.

Therefore, it is necessary to configure the extruding device 1 for this insertion, for example, as said, by producing it with two separated parts that give access to the first chamber 8 when separated or foreseeing a closeable insertion opening.

The device is thus composed by a superior part (15) that overlaps to an inferior part (14).

Advantageously, a part (8") of the first expansion chamber (8) with the relative restriction section (7) can therefore be obtained in the superior part (15) and the other part (8') of the first expansion chamber (8) with its relative restriction section (9) is obtained in the inferior part (14).

In this way, when the two superior and inferior parts are coupled, also the chamber (8) and related path acquire their definitive form, while, when separated, the calibrating element can be easily inserted/removed.

According to the invention, the inferior part (14) comprises an internal element (4) on which said part of extrusion path of the PTFE material is obtained, said internal element (4) being covered with an external sleeve (3) that is applied in a removable manner.

In particular, advantageously, the extrusion path develops along the longitudinal axis in the superior part (15), and in the inferior part (14) in part along the longitudinal axis of the internal element (4) and in part is directed towards the periphery of the internal element.

The external sleeve (3) creates a containment constraint for the extruded material which is lead to the output section.

Therefore, more generally, said extrusion path moves from the longitudinal axis of the extrusion device 1 towards the external perimeter of itself, as it moves gradually from the input to the output section.

Advantageously, said internal element (4) is worked on its periphery in such a way as to form a cradle (10) of expansion of the material in exiting from the expansion chamber (8) and delimited by walls (10') that are spaced one from the other progressively starting from the point (9') of output of the material coming from the expansion chamber (8).

It is also here described a method for extruding a PTFE material through the device (1) according to the invention and comprising the operations of:
- Feeding of the material inside an extrusion path (6, 8, 10, 11) obtained in the device (1);
- Pushing of the material along said path to force the passage thereof along the path and the consequent exiting through the outlet section (11);
- the path comprising at least a first expansion chamber (8) whose input in said expansion chamber (8) and the output from said first expansion chamber (8) are in the form of a restriction section (7, 9) in such a way that the material pushed along the path is subjected to a first restriction through the restriction section (7) to have access to the first expansion chamber (8) and subsequently, once expanded inside said first expansion chamber (8), is subjected to a new restriction in output from the expansion chamber (8) through the restriction section (9).

According to the invention, a new expansion is foreseen in exiting from the restriction section (9), therefore in outlet from the expansion chamber (8).

Advantageously, one or more calibrating elements (70) are foreseen, insertable in the expansion chamber (8) in an interchangeable manner, said calibrating element (70) being configured in such a way as to delimit on the whole the volume of the expansion chamber (8), creating a passage (71) of a pre-determined size for the material.

In this way, it is possible to adjust precisely the number of required diagonal fibers on the product.

### Brief description of drawings

Further features and advantages of the device, according to the invention, will result to be clearer with the description that follows of some embodiments, made to illustrate but not to limit, with reference to the attached drawings, wherein:
- Figure 1 shows a section of the device according to the invention;
- Figure 2 shows the same section with some parts separated one from the other in order to highlight a calibrating element placed inside;
- Figure 3 shows a constructive detail of such a calibrating element;
- Figure 4 shows the final section forming the output path of the produced material;
- Figure 6 shows a further calibrating element;
- Figure 7 shows the calibrating element inserted into the inferior part of the device, before applying the superior part above for closing it.

### Description of some preferred embodiments

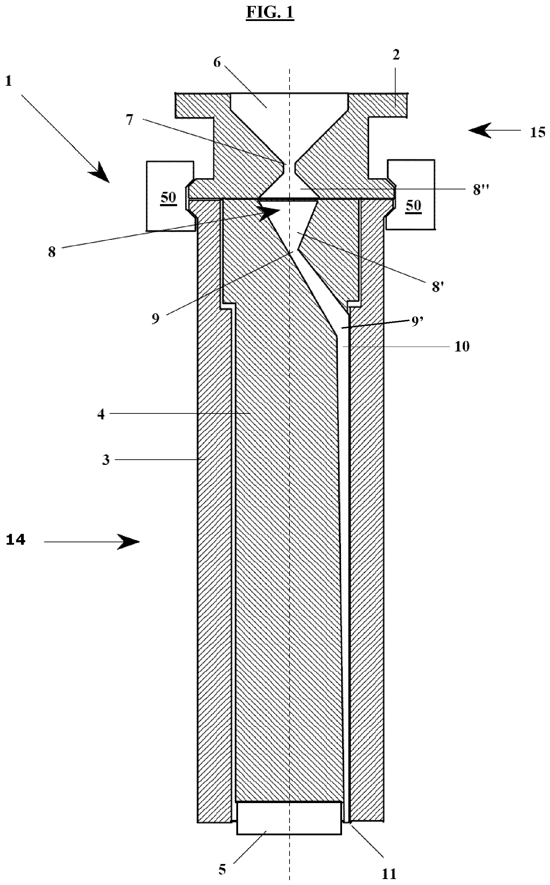

Figure 1 describes in section an extruding device 1 according to the invention.

It foresees two parts (14, 15) that can be coupled together.

More particularly, it is foreseen a superior part 15 formed by a substantially cylindrical element 2 suitable for coupling and overlapping to the inferior part 14, being also this part substantially cylindrical.

Such an element 2 comprises an opening (6) through which it is possible to load the sphere of PTFE material to be extruded. The opening 6 has generally funnel-shaped form, such that it narrows itself progressively until it arrives to the part of restriction section 7. Such a section 7 is as forming an outlet nozzle, such that the material, placed in the opening 6, is pressed and forced to exit through said restriction section 7, thus forming de facto a tubular element of continuous material.

This material exiting from the restriction section 7 conveys inside a chamber 8.

Said chamber 8 is, in turn, formed by a superior part 8'' and an inferior part 8'. The superior part 8'' gradually widens starting from the narrow section 7 downwards. It connects to the inferior part 8' which narrows gradually up to convey to a second narrow section 9. The chamber 8 is therefore a real expansion chamber.

Therefore, the obtained path forms, starting from an opening 6, a first restriction 7 which connects to a chamber 8 terminating at the bottom with another narrow section 9.

Then the narrow section 9 converges through an output section (9-9') in a output path 10 for forming the extruded material, through an output section. Such path in output from the narrow section 9 is a path shaped to allow a new expansion of the material.

The superior part 15 and inferior part 14 can be coupled each other in removable manner.

To this purpose, preferably, a collar 50, for example formed by two symmetrical separable parts can be expected, and that can be connected each other for example through screws or other connection systems.

Once the two parts (14, 15) have been overlapped each other, the collar can be applied around the two parts which are coupled so as bind them, constraining them together.

The shoulder created circumferentially in the two parts causes the collar to grip between the two parties themselves preventing it from sliding, once tightened and secured around.

The inferior part 14 is composed of an external top 3, made of an axially hollow cylinder, which surrounds an inner body 4, being also substantially cylindrical, wherein a part of the above-described path sections is obtained.

The device as a whole is preferably of cylindrical shape to facilitate its production.

Therefore, the superior part is generally cylindrical and is easily obtained by a lathe processing, by making the internal channels (6, 7, 8"). It is generally used steel for its production.

Even the inferior part is made by a lathe processing. In particular, the external top 3 it is also an axially hollow cylindrical body whose inner diameter is obtained in such a way that it can be put slidably on the internal element 4.

The internal element 4 is obtained on a particular type of milling lathe with movement on five axles. It allows to obtain the processing of the internal channel 8', the section 9-9' and the output path wherein the material expands further.

The channels related to the superior part 15, that is the channels 6, 7 and 8" are easily achievable as they are obtained in correspondence of the longitudinal axle of the part 15 itself.

The section of canal 9-9' and 10 related to the cylindrical element 4 are more complex to obtain, as they move from the central axle towards the periphery wherein the material flows and shapes until its output.

The external top 3 is applied as it leads the material along the path 10 towards the output part 11 where a gauge 5 is placed to adjust the angular length and/or the thickness of the output itself.

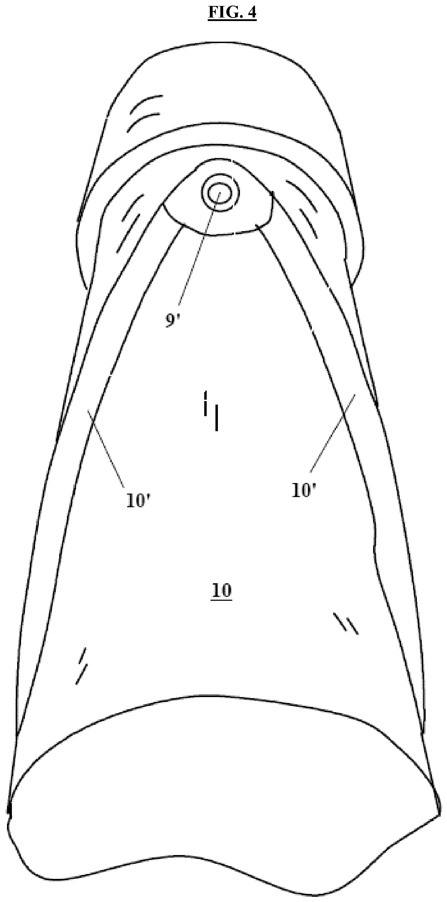

Figure 4 shows better, in axonometric view, the part 4 without the top 3 to highlight the development of the output path 10 which progressively widens fan-shaped and is obtained by means of a processing of its own material removal on the external part of the element 4. Such a path starts from the point 9' which is the outlet section of canal 9-9'. The exiting path 10, as shown in figure 4, is formed by processing the surface in such a manner as to remove a certain angular spacing of material and to create then a sort of cradle 10 delimited by two curved walls 10', thus delimiting the thickness too.

The solution with top is easily achievable in order to obtain an expanded fan-shaped final product, thus allowing also an easy cleaning of the device in its entirety.

The dimensional relationships between the restriction section (7, 9) and the maximum diameter of the expansion chamber 8 can vary between a range as described below.

In particular, preferably, the diameter of around 8 mm of the restriction section (7, 9) is preferred when it is coupled with a size of maximum diameter of the chamber 8 varying from 60 mm to 100 mm. These values have surprisingly proved to be optimization values of the quality of the obtained product.

By describing the invention more in details, a further calibrating element 70 can be placed inside the chamber 8, that can be obviously be removed from the chamber where is placed and replaced by another one with different size or it can also not be used (depending on the required product).

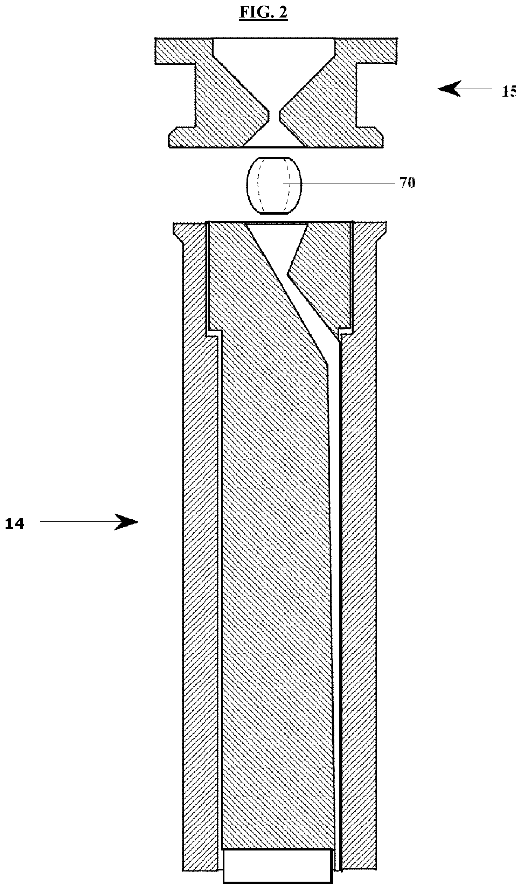

Figure 2 shows indeed the two parts 14 and 15, uncoupled one from the other and highlights such a calibrating element 70 placed inside, which can be removed on needs in order to be replaced with an equivalent one.

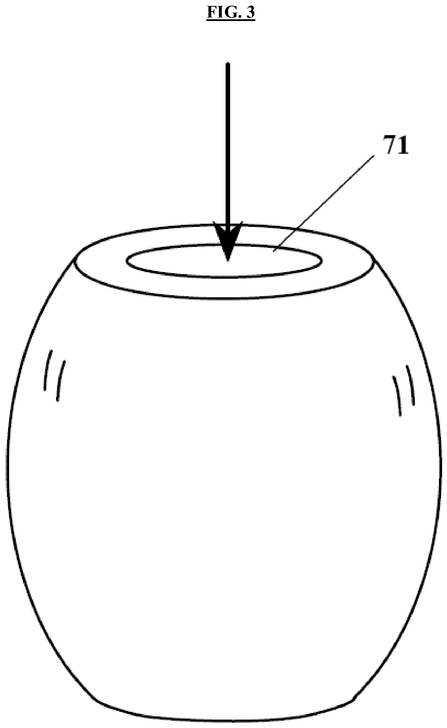

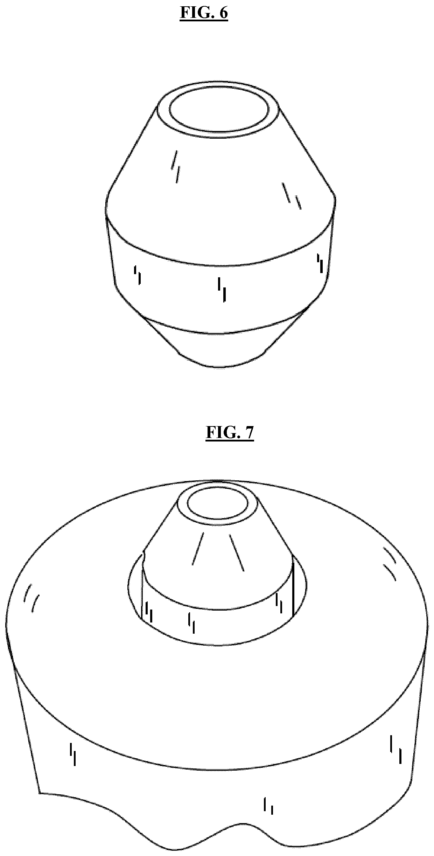

Figure 3 and 6 show solutions of calibrating elements while figure 7 shows, for clarity purposes, the calibrating element inserted into its seat in the inferior part 15.

Figure 3 better describes in detail such a kind of calibrating element which can be for example in form of a barrel and form a passage channel 71, as shown by arrow of figure 3.

The passage channel 71 can be rectilinear or the lateral walls can follow the bellied curve of the barrel shape.

Therefore, the gauge can be replaced time by time with a different one, wherein the diameter of the passage channel 71 changes.

The fact that the passage channel 71 results with a wider or narrower diameter allows to check the size of the chamber 8 and therefore the number of diagonal fibers overlapping to the longitudinal ones.

The solution in figure 6 is fully equivalent to that in figure 3, by simply changing its external form.

Therefore, the chosen solution of such a calibrating element allows to adjust precisely the number of required diagonal fibers, thus making the whole device very versatile.

The prior art document US3315020 indeed does not deal with a proper chamber but only a restriction section which converges towards a widening area. This makes the device not flexible and only able to obtain products with a fixed number of diagonal fibers and, in addition, it is not physically possible to apply any calibrating element.

The solution of use of a calibrating element 70, placed in movable manner, allows to replace such a calibrating element with a different one depending on needs, thus being able to adjust the total number of diagonal fibers with respect to the horizontal ones as required and depending on the product.

Depending on the required product, the calibrating element might also not be used.

Preferably, the maximum diameter of passage of the calibrating element can be between 30 mm and 45 mm for example with an opening of 18 mm approximately. Obviously, the value of the inlet restriction section 7 and outlet 9 are below the dimensional value of the calibrating element which is an expansion chamber of reduced size with respect to the expansion chamber where it is inserted movably.

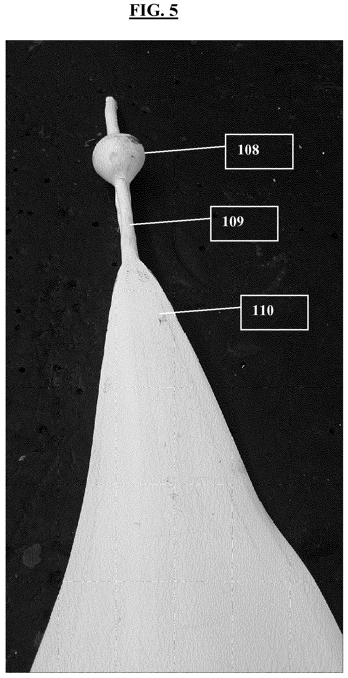

Figure 5 shows, for clarity purpose, a white strip of PTFE material which is being moulded inside the device during its extrusion. The part 108 is highlighted taking the shape of the chamber 8 or of the calibrating element 70, if it is foreseen. Then, there is the section 109 which converges the part which widens fan-shaped 110, that is the part which exits the hole 9' and widens by laying on the section 10 of figure 4. The effects of the related restrictions are clear upstream and downstream part 108.

Therefore, the operation in use is the following:
The superior part 15 is coupled to the inferior part by means of the application of the external sleeve 3. If a particular relationship between fibers oriented to a direction and the others oriented to another direction/s is necessary, such a suitable calibrating element 70 can be arranged inside chamber 8. If the required relationship can be obtained without the use of a particular calibrating element, then it can be omitted.

Therefore, the two parts (14, 15) are coupled and fixed each other through the application of the collar 50 and its clamping.

At this point, everything is ready for the extrusion.

The PTFE spheres, fed inside the opening 6 are pressed by means of an oil-hydraulic cylinder (belonging to a separated machinery to which the present device can be coupled) in such a manner as to create the flow of material which comes out of the opening 11 through the path (7, 8, 9-9', 10). In this case, there are two restriction sections inserted to a first expansion chamber 8, then going along an output path which leads from the axis to the periphery of element 4 and wherein the material expands again (therefore, two restrictions and two expansions in total).

All this allows to obtain fibers with a high number of fibers intersecting each another according different directions and which leave small hollow spaces. Therefore, the final amount of the product is excellent and suitable for various applications.

In addition, the availability to apply a different calibrating element inside the chamber 8 time after time depending on needs, lends high flexibility to the device in its complex, thus allowing to obtain strips with variable numbers of transversal fibers and that can be adjusted precisely depending on needs.

Therefore, it is also described here a calibrating element 70 having a duct 71 for the passage of the material to be extruded, which is insertable in interchangeable manner in the first expansion chamber of such an extruding device.

It is also described here the combination of an extruding device having at least a first expansion chamber 8 comprising a restricted section of input 7 and a restricted section of output 9 and a calibrating element 70 having a duct 71 for the passage of the material to be extruded, which is insertable in interchangeable manner in the first expansion chamber of such an extruding device.

## Claims

1. A device (1) for the production of a strip (110) or a sheet (110) of PTFE material and comprising:
- An extrusion path (6, 8, 10, 11) of the material;
- An opening (6) through which to feed the material in the extrusion path;
- An exiting section (11) through which the extruded material exits from the device (1);
- Said extrusion path (6, 8, 10, 11) forming at least a first expansion chamber (8) whose inlet and outlet in/from said expansion chamber (8) are in the form of a restriction section (7, 9), said extrusion paths forming, in exiting from said first expansion chamber (8), a second expansion section (10);
wherein the device (1) is formed by a superior part (15) that overlaps to an inferior part (14), said two parts (14, 15) being detachable one from the other, so that, when detached, they give access to said first expansion chamber (8);
**characterized in that** and said inferior part (14) is formed by an internal element (4) on which said second expansion section (10) of the PTFE material is obtained, said internal element (4) being covered with an external sleeve(3) that is applied in a removable manner.

2. A device (1), as per claim 1, comprising a calibrating element (70) inserted inside the first expansion chamber (8), wherein the size of the calibration element (70) does not allow its insertion through the two said restriction sections (7, 9).

3. A device (1), as per claim 2, wherein the calibrating element (70) is insertable in the first expansion chamber (8) in an exchangeable manner, said calibrating element (70) being configured in such a way as to delimit on the whole the volume of the first expansion chamber (8), creating a passage (71) of a pre-determined size for the material.

4. A device (1), as per claim 3, wherein a set of calibrating elements is comprised with different sizes of passage (71), preferably substantially barrel-shaped with axial passage.

5. A device (1), as per claim 3 or 4, wherein said calibrating element (70) comprises an axial passage duct (71) of specific size, through which the passage of PTFE material to be extruded takes place in use.

6. A device (1), as per one or more of the preceding claims, wherein a part (8") of the first expansion chamber (8) with the restriction section (7) is obtained in the superior part (15) and the other part (8') of the first expansion chamber (8) with its restriction section (9) is obtained in the inferior part (14) .

7. A device (1), as per one or more of the preceding claims, wherein said extrusion path develops along the longitudinal axis in the superior part (15), and in the inferior part (14) in part along the longitudinal axis of the internal element (4) and in part is directed towards the periphery of the internal element (4).

8. A device, as per claim 1, wherein said second expansion section (10) is obtained in correspondence of the external perimeter of said internal element (4), the device comprising an external sleeve (3) applicable in removable manner to the internal element (4), in such a manner so as to, as applied, delimit said second expansion section (10) obtained on the perimeter of the internal element (4).

9. A device (1), as per one or more of the preceding claims, wherein said internal element (4) is worked on its periphery in such a way as to form a cradle (10) of expansion of the material in exiting from the expansion chamber (8) and delimited by walls (10') that are spaced one from the other progressively starting from the point (9') of output of the material coming from the expansion chamber (8).

10. A device (1), as per claim 1, wherein said first expansion chamber (8) is formed by a superior part (8") and an inferior part (8'), the superior part (8'') gradually widens downwards, starting from the inlet (7) which is a narrow section (7), and connects to the inferior part (8') which narrows gradually up to convey to the second narrow section (9).

11. A method for extruding a PTFE material through a device (1) according to claim 1 and comprising the operations of:
- Feeding of the material inside the extrusion path (6, 8, 10, 11) obtained in the device (1);
- Pushing of the material along said path to force the passage thereof along the path and the consequent exiting through the output section (11);
- the path comprising at least a first expansion chamber (8) whose inlet in said expansion chamber (8) and the outlet from said first expansion chamber (8) are in the form of a restriction section (7, 9) in such a way that the material pushed along the path is subjected to a first restriction through the restriction section (7) to have access to the first expansion chamber (8) and subsequently, once expanded inside said expansion chamber (8), is subjected to a new restriction in output from the first expansion chamber (8) through the restriction section (9), the PTFE material in exiting from the restriction section (9) having a further expansion in the second expansion section (10) of the device (1) .

12. A method, as per claim 11, wherein the device (1) comprises a calibrating element (70) positionable inside the first expansion chamber (8), the calibrating element (70) reducing the volume of the first expansion chamber.

## Patentansprüche

1. Vorrichtung (1) für die Herstellung eines Streifens (110) oder einer Folienbahn (110) aus PTFE-Material, umfassend:
- einen Extrusionspfad (6, 8, 10, 11) des Materials;
- eine Öffnung (6), durch die das Material in den Extrusionspfad zugeführt wird;
- einen Austrittsabschnitt (11), durch den das extrudierte Material aus der Vorrichtung (1) austritt;
- der Extrusionspfad (6, 8, 10, 11) bildet mindestens eine erste Expansionskammer (8), deren Einlass und Auslass in die bzw. aus der Expansionskammer (8) in der Form eines Begrenzungsabschnitts (7, 9) ausgebildet sind, und die Extrusionspfade beim Austritt aus der ersten Expansionskammer (8) einen zweiten Expansionsabschnitt (10) bilden;
wobei die Vorrichtung (1) durch einen oberen Teil (15) ausgebildet ist, der einen unteren Teil (14) überlappt, wobei die beiden Teile (14, 15) voneinander lösbar sind, sodass sie, wenn sie gelöst sind, Zugang zu der ersten Expansionskammer (8) ermöglichen;
**dadurch gekennzeichnet, dass** der untere Teil (14) durch ein inneres Element (4) ausgebildet ist, auf dem der zweite Expansionsabschnitt (10) des PTFE-Materials erhalten wird, wobei das innere Element (4) mit einer äußeren Hülse (3) abgedeckt ist, die in einer abnehmbaren Weise aufgebracht ist.

2. Vorrichtung (1) nach Anspruch 1, umfassend ein Kalibrierelement (70), das in die erste Expansionskammer (8) eingesetzt ist, wobei die Größe des Kalibrierelements (70) sein Einführen durch die beiden Begrenzungsabschnitte (7, 9) nicht zulässt.

3. Vorrichtung (1) nach Anspruch 2, wobei das Kalibrierelement (70) in einer austauschbaren Weise in die erste Expansionskammer (8) einsetzbar ist, und das Kalibrierelement (70) so konfiguriert ist, dass es das Volumen der ersten Expansionskammer (8) insgesamt begrenzt und einen Durchlass (71) einer vorbestimmten Größe für das Material schafft.

4. Vorrichtung (1) nach Anspruch 3, wobei ein Satz von Kalibrierelementen mit unterschiedlichen Größen des Durchlasses (71) beinhaltet ist, vorzugsweise im Wesentlichen tonnenförmig mit axialem Durchlass.

5. Vorrichtung (1) nach Anspruch 3 oder 4, wobei das Kalibrierelement (70) einen axialen Durchlasskanal (71) von spezifischer Größe umfasst, durch den der Durchlass des zu extrudierenden PTFE-Materials bei Verwendung erfolgt.

6. Vorrichtung (1) nach einem oder mehreren der vorhergehenden Ansprüche, wobei ein Teil (8'') der ersten Expansionskammer (8) mit dem Begrenzungsabschnitt (7) im oberen Teil (15) erhalten wird und der andere Teil (8') der ersten Expansionskammer (8) mit ihrem Begrenzungsabschnitt (9) im unteren Teil (14) erhalten wird.

7. Vorrichtung (1) nach einem oder mehreren der vorhergehenden Ansprüche, wobei sich der Extrusionspfad entlang der Längsachse im oberen Teil (15) und im unteren Teil (14) teilweise entlang der Längsachse des inneren Elements (4) entwickelt und teilweise in Richtung der Umfangsfläche des inneren Elements (4) gerichtet ist.

8. Vorrichtung nach Anspruch 1, wobei der zweite Expansionsabschnitt (10) entsprechend dem äußeren Umfang des inneren Elements (4) erhalten wird, wobei die Vorrichtung eine äußere Hülse (3) umfasst, die auf abnehmbare Weise auf das innere Element (4) auf eine solche Weise aufbringbar ist, dass sie, wenn sie aufgebracht ist, den am Umfang des inneren Elements (4) erhaltenen zweiten Expansionsabschnitt (10) begrenzt.

9. Vorrichtung (1) nach einem oder mehreren der vorhergehenden Ansprüche, wobei das innere Element (4) an seiner Umfangsfläche so gearbeitet ist, dass es eine Mulde (10) der Expansion des Materials beim Austritt aus der Expansionskammer (8) bildet und durch Wände (10') begrenzt ist, die ausgehend von dem Punkt (9') der Ausbringung des aus der Expansionskammer (8) kommenden Materials zunehmend voneinander beabstandet sind.

10. Vorrichtung (1) nach Anspruch 1, wobei die erste Expansionskammer (8) durch einen oberen Teil (8'') und einen unteren Teil (8') ausgebildet ist, der obere Teil (8'') sich allmählich nach unten erweitert, ausgehend von dem Einlass (7), der ein enger Abschnitt (7) ist, und sich mit dem unteren Teil (8') verbindet, der sich allmählich verengt, um zum zweiten engen Abschnitt (9) zu führen.

11. Verfahren zum Extrudieren eines PTFE-Materials durch eine Vorrichtung (1) nach Anspruch 1, umfassend die folgenden Vorgänge:
- Zuführen des Materials innerhalb des in der Vorrichtung (1) erhaltenen Extrusionspfades (6, 8, 10, 11);
- Drücken des Materials entlang des Pfades, um den Durchlass desselben entlang des Pfades und den nachfolgenden Austritt durch den Ausbringungsabschnitt (11) zu erzwingen;
- wobei der Pfad mindestens eine erste Expansionskammer (8) umfasst, deren Einlass in die Expansionskammer (8) und der Auslass aus der ersten Expansionskammer (8) in der Form eines Begrenzungsabschnitts (7, 9) so ausgebildet sind, dass das entlang des Pfades gedrückte Material einer ersten Begrenzung durch den Begrenzungsabschnitt (7) unterliegt, um Zugang zur ersten Expansionskammer (8) zu haben, und anschließend nach dem Aufweiten innerhalb der Expansionskammer (8) einer neuen Begrenzung bei der Ausbringung aus der ersten Expansionskammer (8) durch den Begrenzungsabschnitt (9) unterliegt, wobei das PTFE-Material beim Austritt aus dem Begrenzungsabschnitt (9) eine weitere Aufweitung im zweiten Expansionsabschnitt (10) der Vorrichtung (1) aufweist.

12. Verfahren nach Anspruch 11, wobei die Vorrichtung (1) ein Kalibrierelement (70) umfasst, das innerhalb der ersten Expansionskammer (8) positionierbar ist, wobei das Kalibrierelement (70) das Volumen der ersten Expansionskammer verringert.

## Revendications

1. Dispositif (1) destiné à la production d'une bande (110) ou d'une feuille (110) de matériau PTFE et comprenant:
- une voie d'extrusion (6, 8, 10, 11) du matériau ;
- une ouverture (6) par laquelle le matériau est alimenté dans la voie d'extrusion;
- une partie de sortie (11) par laquelle le matériau extrudé sort du dispositif (1);
- ladite voie d'extrusion (6, 8, 10, 11) formant au moins une première chambre d'expansion (8) dont les orifices d'entrée et de sortie de ladite chambre d'expansion (8) ont la forme d'une partie de réduction (7, 9), lesdites voies d'extrusion formant une deuxième partie d'expansion (10), lorsqu'elles sortent de ladite première chambre d'expansion (8);
dans lequel le dispositif (1) est formé d'une partie supérieure (15) qui chevauche une partie inférieure (14), lesdites deux parties (14, 15) étant détachables l'une de l'autre, de sorte que, lorsqu'elles sont détachées, elles permettent l'accès à ladite première chambre d'expansion (8) ;
**caractérisé en ce que** ladite partie inférieure (14) est formée d'un élément interne (4) sur lequel ladite deuxième partie d'expansion (10) du matériau PTFE est obtenue;
ledit élément interne (4) étant recouvert d'un manchon externe(3) qui est appliqué de façon amovible.

2. Dispositif (1), selon la revendication 1, comprenant un élément d'étalonnage (70) inséré à l'intérieur de la première chambre d'expansion (8), dans lequel la taille de l'élément d'étalonnage (70) ne permet pas son insertion à travers lesdites deux parties de réduction (7, 9)

3. Dispositif (1), selon la revendication 2, dans lequel l'élément d'étalonnage (70) peut être inséré dans la première chambre d'expansion (8) de façon échangeable, ledit élément d'étalonnage (70) étant configuré de façon à délimiter, globalement, le volume de la première chambre d'expansion (8), créant ainsi un passage (71) d'une taille prédéterminée pour le matériau.

4. Dispositif (1), selon la revendication 3, dans lequel un ensemble d'éléments d'étalonnage est prévu, avec différentes tailles de passage (71), de préférence de forme sensiblement cylindrique avec un passage axial.

5. Dispositif (1), selon les revendications 3 ou 4, dans lequel ledit élément d'étalonnage (70) comprend un conduit de passage axial (71) d'une taille spécifique, dans lequel le passage du matériau PTFE à extruder se fait en cours d'utilisation.

6. Dispositif (1), selon une ou plusieurs des revendications précédentes, dans lequel une partie (8") de la première chambre d'expansion (8) avec la partie de réduction (7) est obtenue dans la partie supérieure (15) et l'autre partie (8') de la première chambre d'expansion (8) avec sa partie de réduction (9) est obtenue dans la partie inférieure (14).

7. Dispositif (1), selon une ou plusieurs des revendications précédentes, dans lequel ladite voie d'extrusion se développe le long de l'axe longitudinal dans la partie supérieure (15), et dans la partie inférieure (14) en partie le long de l'axe longitudinal de l'élément interne (4) et, est en partie dirigée vers la périphérie de l'élément interne (4).

8. Dispositif, selon la revendication 1, dans lequel ladite deuxième partie d'expansion (10) est obtenue en correspondance avec le périmètre externe dudit élément interne (4), le dispositif comprenant un manchon externe (3) qui s'applique de façon amovible sur l'élément interne (4), de telle sorte que, lorsqu'il est appliqué, il délimite ladite deuxième partie d'expansion (10) obtenue sur le périmètre de l'élément interne (4).

9. Dispositif (1), selon une ou plusieurs des revendications précédentes, dans lequel ledit élément interne (4) est usiné sur sa périphérie de façon à former un berceau (10) d'expansion du matériau lors de sa sortie de la chambre d'expansion (8) et est délimité par des parois (10') qui sont espacées les unes des autres progressivement à partir du point (9') de l'orifice de sortie du matériau provenant de la chambre d'expansion (8).

10. Dispositif (1), selon la revendication 1, dans lequel ladite première chambre d'expansion (8) est formée d'une partie supérieure (8") et d'une partie inférieure (8'), la partie supérieure (8") s'élargissant progressivement en allant vers le bas, à partir de l'orifice d'entrée (7) qui est une partie étroite (7), et est reliée à la partie inférieure (8'), laquelle se rétrécit progressivement jusqu'à atteindre la deuxième partie étroite (9).

11. Procédé d'extrusion d'un matériau PTFE à travers un dispositif (1) selon la revendication 1 et comprenant les opérations consistant à:
- acheminer le matériau à l'intérieur de la voie d'extrusion (6, 8, 10, 11) obtenue dans le dispositif (1);
- pousser le matériau le long de ladite voie afin de forcer le passage de celui-ci le long de la voie et sortir, par la suite, à travers la partie de sortie (11);
- la voie comprenant au moins une première chambre d'expansion (8) dont l'orifice d'entrée dans ladite chambre d'expansion (8) et l'orifice de sortie de ladite première chambre d'expansion (8) ont la forme d'une partie de réduction (7, 9), de telle sorte que le matériau poussé le long de la voie est soumis à une première restriction à travers la partie de réduction (7) pour avoir accès à la première chambre d'expansion (8) et ensuite, une fois expansé à l'intérieur de ladite chambre d'expansion (8), le matériau est soumis à une nouvelle restriction à la sortie de la première chambre d'expansion (8) à travers la partie de réduction (9), le matériau PTFE, en sortant de la partie de réduction (9), étant à nouveau expansé dans la deuxième partie d'expansion (10) du dispositif (1).

12. Procédé, selon la revendication 11, dans lequel le dispositif (1) comprend un élément d'étalonnage (70) pouvant être positionné à l'intérieur de la première chambre d'expansion (8), l'élément d'étalonnage (70) réduisant le volume de la première chambre d'expansion.
